# EUROPEAN PATENT SPECIFICATION

(11) **EP 4 065 944 B1**
(45) Date of publication and mention of the grant of the patent: **20.08.2025**
(21) Application number: 20829337.3
(22) Date of filing: 20.11.2020
(51) Int. Cl.: G01L 1/22

(54) **METHOD FOR INTERNALLY INSTRUMENTING A STRAIN GAUGE LOAD CELL AND STRAIN GAUGE LOAD CELL THUS OBTAINED**
VERFAHREN ZUR INTERNEN INSTRUMENTIERUNG VON WÄGEZELLEN MIT DEHNUNGSMESSSTREIFEN UND SO ERHALTENE WÄGEZELLE MIT DEHNUNGSMESSSTREIFEN
PROCÉDÉ DE FABRICATION INTERNE D'UNE CELLULE DE CHARGE DE JAUGE DE CONTRAINTE ET CELLULE DE CHARGE DE JAUGE DE CONTRAINTE AINSI OBTENUE

(30) Priority: 25.11.2019 IT 201900022065
(43) Date of publication of application: 05.10.2022
(73) Proprietor: Studio A.I.P. S.R.L., 21040 Oggiona con Santo Stefano (VA) (IT)
(72) Inventor: BRIVIO, Antonio, 21040 Oggiona Con Santo Stefano (VA) (IT); BRIVIO, Paolo, 21040 Oggiona Con Santo Stefano (VA) (IT)
(74) Representative: PGA S.p.A.
(86) International application number: PCT/IB2020/060961
(87) International publication number: WO 2021/105831

(56) References cited:
- EP-A1- 2 957 225
- EP-A1- 3 566 937
- US-A1- 2015 204 738
- US-B2- 8 024 980

## Description

### Field of the finding

The object of the present invention is a method for internally instrumenting a strain gauge load cell and a strain gauge load cell thus obtained. The strain gauge load cells are composed of an elastic element, on which one or more strain gauges have been positioned. The elastic element generally but not necessarily is made of metal, e.g. steel or aluminum, so as to be very strong and simultaneously also provided with a minimum elasticity. The strain gauge is an electronic component (transducer) employed for measuring a force applied on the abovementioned elastic element by means of the measurement of an electrical signal that varies due to the deformation that such force produces on said element. In particular, the present invention relates to a method used for applying one or more strain gauges on the support element and a strain gauge load cell obtained by means of such method.

### Background of the finding

Strain gauge load cells are obtained in form of dynamometric pin or pins. The dynamometric pin is mounted, for example, on joints, shackles or axles in many different industrial fields, such as for example on cranes, trucks, earth-moving machines, structures of various type such as bridges, viaducts, etc., and is an instrument for detecting and recording the load forces on the junctions. A dynamometric pin of known type comprises one or more strain gauges glued on an external surface of the pin, at suitable slots. The strain gauge is then covered by means of resins and/or metal plates in order to protect it from external agents and/or from elements of the structures to which it is applied and/or from electromagnetic fields.

Public document US2015204738A1 discloses a modular assembly for measuring forces on a structure, wherein the structure contains a strain gage module that is insertable in a cavity or hole in the structure.

Public document EP3566937A1 discloses a bicycle crank arm comprising a stress/strain sensor aligned according to a stress/strain to be detected and a temperature sensor associated with said stress/strain sensor, wherein, in the manufacturing process of the crank arm, one or more stress/strain sensors are first fixed on a riser surface of a rigid core, then the structure is inserted in a mold and the composite material is consolidated subjecting it to a suitable temperature and pressure profile.

Public document EP2957225A1 discloses an equipment comprising a strain gauge device for continually measuring the blood pressure of a user. The strain gauge device comprises an elastic band, the strain of which is to be measured. The sensor comprises at least one elongated measuring strand changing resistivity in dependence of the strain of the band. The measuring strand is mounted with pretension to the band by means of a layer of glue disposed between the sensor and the band.

Public Document US8024980B2 discloses a load measuring device comprising a hollow shear pin wherein strain gages are glued onto the inner wall of the shear pin hole.

### Summary

In such context, the Applicant has observed that the strain gauges of the known load cells like those described above must be protected with suitable technical expedients in order to function correctly and/or in order to prevent damaging them. The Applicant has also observed that, notwithstanding such technical expedients, the known load cells are not adapted to being employed in very heavy/severe applications, e.g. due to the presence of high pressures and/or other mechanical elements which can come into contact with the strain gauges and damage them. The Applicant has therefore perceived that it is necessary to more effectively and safely protect the strain gauges.

Hence, one objective of the present invention is to propose a method that allows instrumenting strain gauge load cells so as to effectively protect the strain gauges. Another objective of the present invention is to propose a strain gauge load cell thus instrumented that is therefore stronger, more reliable and precise.

Another objective of the present invention is to propose a strain gauge load cell with the abovementioned characteristics which is also relatively inexpensive to produce.

The Applicant has found that the above-indicated objectives and still others can be attained by applying one or more strain gauges, inserting them in cavities of a monolithic elastic element so that it is/they are in protected position/positions and/or it does/they do not interfere with elements of the structure on which the load cell is installed.

The Applicant has found that the above-indicated objectives and still others can be attained by pre-assembling a printed circuit provided with such strain gauges and comprising an adhesive layer, so as to be able to temporarily associate it with an internal wall of the abovementioned cavity, in order to then stabilize the joining of the strain gauge or gauges to the elastic element by means of polymerization of a glue applied to only the strain gauge/gauges.

In particular, the above-indicated objectives and still others are substantially attained by a method for internally instrumenting a strain gauge load cell and by a strain gauge load cell, according to one or more of the enclosed claims and/or in accordance with one or more of the following aspects.

More specifically, according to an independent aspect, the present invention regards a method for internally instrumenting a strain gauge load cell.

The method comprises:
▪ preparing a monolithic elastic element of a load cell, in which the monolithic elastic element has at least one cavity;
▪ preparing at least one printed circuit comprising at least one strain gauge, in which the printed circuit has a first face configured to be coupled to the monolithic elastic element and a second face opposite the first face, in which an adhesive layer is placed on at least part of the first face except at said at least one strain gauge;
▪ applying a layer of glue on the first face and substantially only at said at least one strain gauge;
▪ inserting the printed circuit in the cavity, making the adhesive layer adhere to an internal surface of the cavity;
▪ pressing said at least one strain gauge against said internal surface so as to make the layer of glue polymerize and to stably join said at least one strain gauge to the internal surface.

According to an independent aspect, the present invention regards a strain gauge load cell, optionally instrumented according to the method of the preceding aspect and/or according to one or more of the following aspects.

The strain gauge load cell comprises:
a monolithic elastic element having at least one cavity;
at least one printed circuit comprising at least one strain gauge, in which the printed circuit has a first face coupled to an internal surface of the cavity and a second face opposite the first face.

Optionally, an adhesive layer joins the printed circuit to the internal surface except at said at least one strain gauge; in which a layer of polymerized glue joins said at least one strain gauge to the internal surface.

In the present description and in the enclosed claims, by "glue" it is intended a glue usually used for the application of the strain gauges, typically an epoxy glue, for example a pre-catalyzed epoxy mixture, diluted in solvent, such as adhesive systems M-Bond 43-B, 600 and 610 by Micro Measurements^{™}.

In the present description and in the enclosed claims, by "adhesive" it is intended, for example, an acrylic adhesive such as those produced by 3M^{™}, Tesa^{™}, Scotch^{™}.

The Applicant has verified that the method according to the invention allows applying the strain gauges within cavities of monolithic elastic elements in a precise, reliable and relatively simple and fast manner.

The Applicant has also verified that the method according to the invention allows applying the strain gauges within cavities of monolithic elastic elements with relatively limited costs.

The Applicant has verified that the strain gauge load cell according to the invention allows effectively protecting the strain gauges from external agents (for example high pressures, magnetic fields, etc.) and is therefore strong, reliable and precise. The Applicant has also verified that the strain gauge load cell according to the invention can be used in many different application fields and also in very heavy/severe conditions.

Aspects of the invention are listed hereinbelow.

In one aspect, the glue and the adhesive comprise or are defined by a same substance, for example selected from among those indicated above (epoxy glue, for example pre-catalyzed epoxy mixture, diluted in solvent, such as adhesive systems M-Bond 43-B, 600 and 610 by Micro Measurements", an acrylic adhesive such as those produced by 3M^{™}, Tesa^{™}, Scotch^{™}).

In one aspect, provision is made for administering heat at least to the layer of glue of the strain gauge to make the layer of glue polymerize or to accelerate the polymerization of the layer of glue.

In one aspect, provision is made for administering heat to the monolithic elastic element with the printed circuit.

In one aspect, administering heat comprises inserting the monolithic elastic element with the printed circuit in an oven.

In one aspect, provision is made for keeping the strain gauge pressed against the internal surface up to the solidification of the glue and the stable joining of the strain gauge to the monolithic elastic element.

In one aspect, pressing said at least one strain gauge against said internal surface comprises: inserting a presser in the cavity and expanding said presser until said presser abuts, directly or indirectly (i.e. with the interposition of a possible element), against said at least one strain gauge.

In one aspect, pressing said at least one strain gauge against said internal surface comprises: introducing a gas under pressure in the cavity.

In one aspect, provision is made for keeping the expanded presser in the cavity or for keeping the cavity under pressure up to the solidification of the glue and the stable joining of the strain gauge to the monolithic elastic element.

In one aspect, provision is made for keeping the expanded presser in the cavity or for keeping the cavity under pressure during the administration of heat.

In one aspect, administering heat comprises: inserting the monolithic elastic element with the printed circuit and with the expanded presser, or with the cavity under pressure, in an oven.

In one aspect, the presser comprises a rigid body, for example metallic, comprising a plurality of parts and springs configured for pushing said parts towards the expanded configuration.

In one aspect, the presser comprises a body, optionally cylindrical, divided into two halves along an axial plane and springs interposed between the two halves.

In one aspect, the presser comprises an inflatable body.

In one aspect, the printed circuit comprises a base comprising conductive tracks.

In one aspect, the base has at least one through opening (or window), wherein the strain gauge is placed in the through opening of the base.

In one aspect, the strain gauge comprises a support and a conductive grid applied on the support.

In one aspect, edges of the through opening surround the support.

In one aspect, the strain gauge is electrically connected to the conductive tracks of the base, optionally directly or by means of conductive microwires.

In one aspect, all or some of the edges of the through opening are spaced from the support.

In a different aspect, the edges of the through opening are joined, for example welded, to the base.

In one aspect, provision is made for joining the strain gauge to the base, partially superimposing the support on at least one of the edges of the through opening.

In one aspect, the support of the strain gauge is partially superimposed on at least one of the edges of the through opening.

In one aspect, the printed circuit comprises a connecting element arranged on the second face and applied, e.g. by means of adhesive, to the strain gauge.

In one aspect, the printed circuit comprises a connecting element arranged on the second face and joined, e.g. by means of adhesive, to edges of the through opening and to the strain gauge.

In one aspect, preparing the printed circuit comprises:
▪ preparing a base comprising conductive tracks, wherein the base has at least one through opening (or window);
▪ placing said at least one strain gauge in the through opening, wherein the strain gauge comprises a support and a conductive grid applied on the support, wherein edges of the through opening surround the support;
▪ electrically connecting the strain gauge to the conductive tracks of the base;
▪ joining the strain gauge to the base by means of at least one connecting element so that the base and the strain gauge form a single body.

In one aspect, when said at least one strain gauge is placed in the through opening, the edges of the through opening are spaced from the support.

In one aspect, the base is flexible.

In one aspect, preparing the base comprises: making, in the base, said at least one through opening as a function of dimensions of said at least one strain gauge. Such characteristics allow using strain gauges (which are the most expensive elements) that are commercially available and adapting the base by simply making windows therein that are adapted (e.g. regarding number, position, dimensions and shape) to the selected strain gauges. In this manner, the production costs can be considerably limited.

In one aspect, said at least one strain gauge is integrated in the base.

In one aspect, at least one portion of the base houses the conductive grid/grids of the strain gauge.

In one aspect, the base comprises first terminals configured for electrically connecting the strain gauge to the conductive tracks of the base, optionally by means of conductive microwires.

In one aspect, the electrical connection between the strain gauge and the conductive tracks of the base is executed by welding microwires to the first terminals of the base and to terminals of the strain gauge.

In one aspect, the base comprises second terminals configured for connecting the conductive tracks to electronic devices, optionally outside the strain gauge load cell.

In one aspect, joining the strain gauge to the base comprises: applying the connecting element on the second face so as to make it adhere, e.g. by means of an adhesive, to the strain gauge and to the edges of the through opening.

In one aspect, the connecting element is only placed at the through opening and at the strain gauge.

In one aspect, the connecting element is made of pliable material, optionally of rubber.

In one aspect, the connecting element covers the first terminals of the base, the strain gauge and the microwires, protecting them.

In one aspect, the connecting element is in relief with respect to the second face.

In one aspect, the connecting element is joined to the edges of the through opening and to one side of the strain gauge placed on the second face while an opposite side of the strain gauge, placed on the first face, has or is configured for receiving the layer of glue.

In one aspect, the presser presses or is configured for pressing only against the connecting element and hence for pressing only the strain gauge against said internal surface.

In one aspect, the printed circuit comprises a removable film applied on the first face.

In one aspect, the removable film has at least one respective through opening (or window) placed at the through opening of the printed circuit.

In one aspect, the removable film covers the adhesive layer.

In one aspect, before inserting the printed circuit in the cavity, making the adhesive layer adhere to the internal surface of the cavity, provision is made for removing the removable film from the first face.

In one aspect, provision is made for closing, optionally sealingly, the cavity after having internally instrumented the strain gauge load cell, optionally by making wires connected to the second terminals exit, for the connection with the electronic devices.

In one aspect, the monolithic elastic element is made of metal, for example of iron, steel or aluminum.

In one aspect, the cavity is a through or blind hole.

In one aspect, the monolithic elastic element has an elongated cylindrical shape. In one aspect, the monolithic elastic element is a pin, a screw or a shaft.

In one aspect, the cavity is an axial hole.

In one aspect, the strain gauge/gauges is/are configured for detecting twisting and/or bending and/or cutting and/or axial tensile load or compression of the elastic element.

In one aspect, at least one additional strain gauge is placed and joined to one end of the support or to an external edge of the support, optionally at a recess made in said external edge.

Further characteristics and advantages will be clearer hereinbelow from the detailed description of a preferred but non-exclusive embodiment of a method for internally instrumenting a strain gauge load cell and a strain gauge load cell in accordance with the present invention.

### Description of the drawings

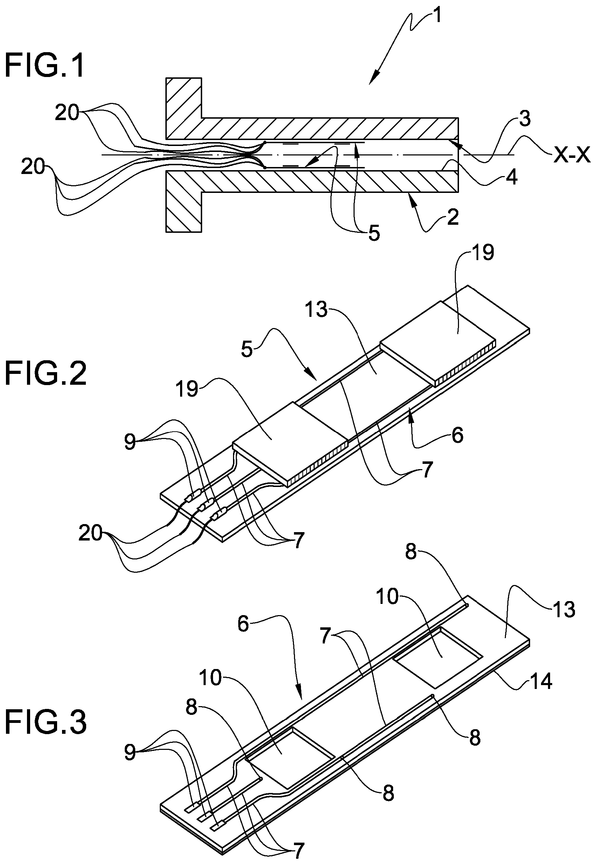

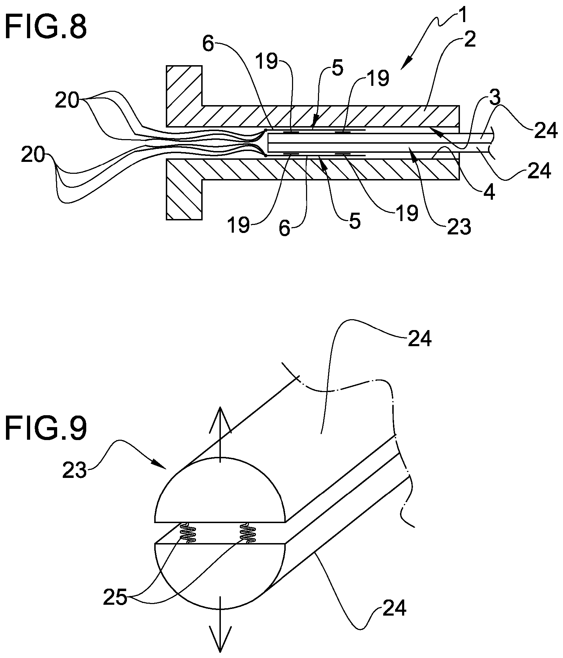

Such description will be set forth hereinbelow with reference to the enclosed drawings, provided only as a non-limiting example, in which:
▪ figure 1 illustrates a sectional view of a strain gauge load cell according to the present invention;
▪ figure 2 illustrates a three-dimensional view of a printed circuit of the strain gauge load cell of figure 1;
▪ figures 3 to 7 illustrate respective construction steps of the printed circuit of figure 2 according to the method of the present invention;
▪ figure 8 illustrates a production step of the strain gauge load cell according to the method of the present invention.

### Detailed description

With reference to the abovementioned figures, reference number 1 overall indicates a strain gauge load cell according to the invention.

The strain gauge load cell 1 of the example of the enclosed figures 1 and 8 is a dynamometric pin and comprises an elastic element 2 made of steel, shaped in fact as a pin and provided with a cavity 3 defined by a through axial hole with circular section. The dynamometric pin can for example be part of a shackle for joining cables or be part of more complex structures and/or mechanisms, for example used in a railway context for moving a switch or for the junction of rails. The elastic element/pin 2 is monolithic, i.e. it is formed by a single piece, and it has a main axis X-X. The through axial hole is coaxial with such main axis X-X and is opened on both opposite ends of the pin 2.

On an internal surface 4 of the cavity 3, two printed circuits 5 are applied in diametrically opposite positions. The two printed circuits 5 are substantially identical and have been represented in side section or only schematically in figures 1 and 8. Each of the printed circuits 5 is better illustrated in figures 3 to 7. The printed circuit 5 comprises a base 6 comprising conductive tracks 7 with first terminals 8 and second terminals 9. The base 6 is flexible and can be constructed with known processes. The tracks 7 and the first and second terminals 8, 9 of figures 2, 3 and 5 are only non-limiting examples. The characteristics of such conductive tracks (geometry, dimensions, number, shape) which define the connections network are design selections that depend on the specific strain gauge load cell 1 to be made. The base 6 has an elongated rectangular shape in plan view. Also the shape of the base 6 is exemplifying and non-limiting.

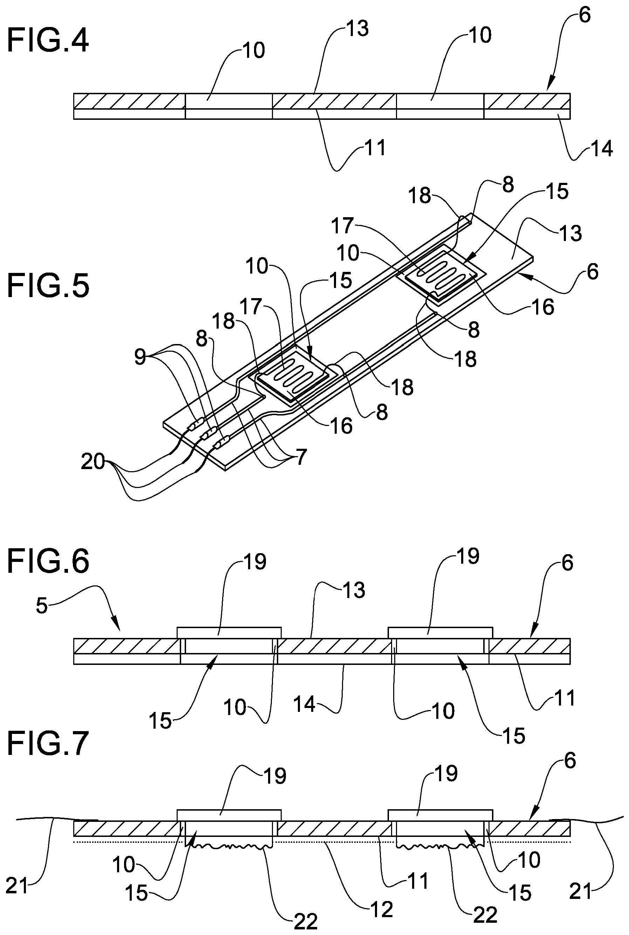

The base 6 has two windows or through openings 10 which traverse the entire thickness of the base 6 itself. The two through openings 10 are spaced from each other and each has a rectangular shape (Figures 3 and 4). A first face 11 of the base 6 (which in the enclosed figures 2 - 7 is directed downward) is covered with an adhesive layer 12 (schematically illustrated in figure 7). The adhesive is for example a commercially available adhesive, for example by 3M^{™}, Tesa^{™} or Scotch^{™}. A second face 13 of the base 6 (which in the enclosed figures 2 - 7 is directed upward) carries the abovementioned conductive tracks 7.

The base 6 also comprises a removable film 14 applied on the first face 11. The removable film 14 covers the adhesive layer 13. The removable film 14 has two respective through openings (or windows) placed at the through openings of the base 6. Edges of the through openings 10 of the base 6 coincide with edges of the through openings of the removable film 14. The removable film 14 can be easily removed, also manually, leaving the adhesive layer 12 visible. The base 6 can be made of a plurality of pieces in an automatic line, before completing the production of the printed circuit 5, according to the method described hereinbelow.

The two through openings 10 are made as a function of the type of strain gauges 15 to be used. Indeed, in each of the two through openings 10, a respective strain gauge 15 is placed. The strain gauge 15 comprises, in a per se known manner, a support 16 and a conductive grid 17 applied on the support 16 (Figure 5). The conductive grid 17 has respective terminals connected to the first terminals 8 of the base 6. The specific characteristics of the conductive grid 17 are design selections that depend on the specific strain gauge load cell 1 to be made, and those illustrated in the enclosed drawings are non-limiting. The strain gauges 15 used can be those that are commercially available. The strain gauges 15 are configured for detecting twisting and/or bending and/or cutting and/or axial tensile load or compression of the elastic element 2.

The support 16 has a shape similar to that of the through opening 10 and its dimensions are slightly smaller than those of said through opening 10, so as to allow easily placing the strain gauge 14 in such through opening 10. The edges of the through opening 10 surround the support 16 and are slightly spaced from the support 16.

Once each strain gauge 15 is placed in the respective through opening 10, the first terminals 8 of the base 6 are electrically connected to the terminals of the strain gauge 15 by welding conductive microwires 18 (Figure 5). Subsequently, provision is made for mechanically joining each of the strain gauges 14 to the base 6 by means of connecting elements 19 constituted by rubber bearings. Each of the rubber bearings is applied on the second face 13 and at the through opening 10 and at the strain gauge 15. In particular, the rubber bearing has a rectangular shape sized in a manner such to entirely cover the through opening 10 and to abut against the edges of the through opening 10. The rubber bearing is adhered to the strain gauge 15 and to such edges by means of an adhesive, so that the strain gauge 15 remains hung below the rubber bearing (Figure 6). The rubber bearing is also sized in a manner such to cover and protect also the first terminals 8 of the base 6 and the microwires 18. The rubber bearings are in relief with respect to the second face 13 (Figures 2, 6, 7). Electrical wires 20 are welded to the second terminals 9 of the base 6 in order to be able to connect electronic devices for managing the signal of the strain gauges 15.

In embodiment variants not illustrated in detail, the strain gauges 15 of the printed circuit 5 are integrated in the base 6, i.e. the support 16 forms a single body with the base 6 or, in other words, portions of the base 6 are configured for housing the conductive grids 17 and defining the strain gauges 15. In this case, the strain gauge 15 is directly electrically connected to the conductive tracks of the base 6, without having to use the conductive wires.

In other embodiment variants that are not illustrated in detail, the support 16 of the strain gauges 15 can be partially superimposed on one or more of the edges of the base 6. Also in this case, the strain gauge is directly electrically connected to the conductive tracks of the base, without having to use the conductive wires.

In other embodiment variants that are not illustrated in detail, a strain gauge, in addition to that/those placed in the respective through opening/openings 10, can be placed and joined to one end of the support 16 or to an external edge of the support 16, i.e. it is not placed in a respective through opening 10.

The assembly thus obtained forms one of the printed circuits 5 to be applied to the elastic element 2 according to the method for internally instrumenting the strain gauge load cell 1 of the present invention. Hereinbelow, the application will be described of only one of the printed circuits 5 to the elastic element 2, since the application of the other printed circuit 5 is executed in the same manner.

Two strips 21, e.g. of adhesive strip, are applied to opposite ends of the printed circuit 5 in order to facilitate the insertion and the positioning in the through axial hole. In this manner, it is possible to retain the printed circuit 5 by means of the strips 21 while it is inserted in the through axial hole and correctly orient it. The strips 21, the base 6 and also the pin 2 can be provided with graphical references for such purpose.

At this point, the removable film 14 is removed from the first face 11 and a layer of glue 22 is only applied on each strain gauge 15 on the same side as the printed circuit 5 on which the adhesive layer 12 (Figure 7) is present, i.e. on the opposite side with respect to the rubber bearing. The glue is for example M-Bond 43-B, 600 or 610 by Micro Measurements^{™}.

In embodiments of the present invention, the abovementioned adhesive and the glue can be defined by a same substance selected, for example, from among those mentioned above, such as the pre-catalyzed epoxy mixture diluted in solvent.

The printed circuit 5 is inserted in the through axial hole with the first face 11 directed towards the internal surface 4, correctly oriented, abutted against and adhered to said internal surface 4 by means of the adhesive layer 12. Such adhesion serves to at least temporarily block the printed circuit on the pin 2 up to the subsequent stable joining obtained with the polymerization of the layers of glue 22 present on the strain gauges 15.

The printed circuit 5 can be aligned with one axis of the axial hole, as illustrated in figure 8, or in another manner. For example, the printed circuit 5 can be arranged along a circumferential line coaxial with the abovementioned axis of the axial hole. The strain gauges 15 are pressed against the internal surface 4 for a time necessary and sufficient for polymerizing and solidifying the layer of glue 22 and for stably joining the strain gauges to the internal surface 4.

For such purpose, according to one embodiment, a presser 23 is inserted in the through axial hole and expanded until it is abutted against the rubber bearings and pressed against said rubber bearings and hence only against the strain gauges 15. The illustrated presser 23 comprises a metallic cylindrical body divided into two halves 24 along an axial plane thereof and springs 25 interposed between the two halves 24 (Figures 8 and 9). Once the presser 23 is inserted in the through axial hole, the springs 25 push the two halves 24 in opposite radial senses against the rubber bearings of each of the two printed circuits 5 (Figure 8). In an embodiment variant, in place of the springs, actuators are present, for example pneumatic actuators, which carry out the same function as said springs.

While the presser 23 is positioned in the through axial hole and the strain gauges 15 are kept pressed against the internal surface 4, the strain gauge load cell 1 is placed in an oven for a predefined time, so as to administer heat to the layers of glue 22 of the strain gauges 15 and determine or accelerate the polymerization thereof.

In embodiment variants and as a function of the type of glue used, the administration of heat might not be necessary (cold glue).

According to other embodiments, not illustrated in the drawings, the presser 23 is defined by an inflatable body.

According to further embodiments, not illustrated in the drawings, the strain gauges 15 are pressed against the internal surface 4 by suitably sealing the through axial hole and introducing a gas under pressure therein.

Once the strain gauges 15 are stably joined to the pin, provision is possibly made for closing the through axial hole by making the electrical wires 20 connected to the second terminals 9 exit, for the connection with the electronic devices. Part of the electronics can also be housed in the through hole itself.

### List of elements

- 1: strain gauge load cell
- 2: monolithic elastic element
- 3: cavity
- 4: internal surface of the cavity
- 5: printed circuit
- 6: base
- 7: conductive tracks
- 8: first terminals
- 9: second terminals
- 10: through opening
- 11: first face
- 12: adhesive layer
- 13: second face
- 14: removable film
- 15: strain gauge
- 16: support
- 17: conductive grid
- 18: conductive microwire
- 19: connecting element
- 20: electrical wire
- 21: strips
- 22: layer of glue
- 23: presser
- 24: half of the presser
- 25: springs

## Claims

1. Method for internally instrumenting a strain gauge load cell, comprising:
▪ preparing a monolithic elastic element (2) of a load cell (1), wherein the monolithic elastic element (1) has a cavity (3);
▪ preparing at least one printed circuit (5) comprising at least one strain gauge (15), wherein the printed circuit (5) has a first face (11) configured to be coupled to the monolithic elastic element (2) and a second face (13) opposite the first face (11), wherein an adhesive layer (12) is placed on at least part of the first face (11) except at said at least one strain gauge (15);
▪ applying a layer of glue (22) on the first face (11) and substantially only at said at least one strain gauge (15);
▪ inserting the printed circuit (5) in the cavity (3), making the adhesive layer (12) adhere to an internal surface (4) of the cavity (3);
▪ pressing said at least one strain gauge (15) against said internal surface (4) so as to make the layer of glue (22) polymerize and to stably join said at least one strain gauge (15) to the internal surface (4).

2. Method according to claim 1, also comprising: administering heat at least to the layer of glue (22) of the strain gauge (15) to make the layer of glue (22) polymerize.

3. Method according to claim 1 or 2, wherein the glue and the adhesive comprise or are defined by a same substance.

4. Method according to claim 1, 2 or 3, wherein preparing the printed circuit (5) comprises:
▪ preparing a base (6) comprising conductive tracks (7), wherein the base (6) has at least one through opening (10);
▪ placing said at least one strain gauge (15) in the through opening (10), wherein the strain gauge (15) comprises a support (16) and a conductive grid (17) applied on the support (16), wherein edges of the through opening (10) surround the support (16);
▪ electrically connecting the strain gauge (15) to the conductive tracks (7) of the base (6).

5. Method according to claim 4, wherein provision is made for joining the strain gauge (15) to the base (6) by means of at least one connecting element (19) so that the base (6) and the strain gauge (15) form a single body.

6. Method according to claim 4, wherein provision is made for joining the strain gauge (15) to the base (6), partially superimposing the support (16) on at least one of the edges of the through opening (10).

7. Method according to one of the claims from 1 to 6, wherein the printed circuit (5) comprises a removable film (14) applied on the first face (11); wherein, before inserting the printed circuit (5) in the cavity (3), making the adhesive layer (12) adhere to the internal surface (4) of the cavity (3), the removable film (14) is removed from the first face (11).

8. Method according to one of the preceding claims from 1 to 7, wherein pressing said at least one strain gauge (15) against said internal surface (4) comprises: inserting a presser (23) in the cavity (3) and expanding said presser (23) until said presser (23) abuts against said at least one strain gauge (15); keeping the presser (23) expanded in the cavity (3).

9. Method according to claim 8 when it depends on claim 2, wherein administering heat comprises: inserting the monolithic elastic element (2) with the printed circuit (5) and with the presser (23) expanded in an oven.

10. Method according to claim 8 when it depends on claim 5, wherein the presser (23) only presses against the connecting element (19).

11. Method according to one of the preceding claims from 1 to 10, wherein pressing said at least one strain gauge (15) against said internal surface (4) comprises: introducing a gas under pressure in the cavity (3).

12. Strain gauge load cell instrumented according to the method of one or more of the claims from 1 to 11, wherein said load cell comprises:
a monolithic elastic element (2) having a cavity (3);
at least one printed circuit (5) comprising at least one strain gauge (15), wherein the printed circuit (5) has a first face (11) coupled to an internal surface (4) of the cavity (3) and a second face (13) opposite the first face (11).

13. Strain gauge load cell according to claim 12, wherein an adhesive layer (12) joins the printed circuit (5) to the internal surface (4) except at said at least one strain gauge (15); wherein a layer of polymerized glue (22) joins said at least one strain gauge (15) to the internal surface (4).

14. Strain gauge load cell according to claim 12 or 13, wherein the printed circuit (5) comprises a base (6) comprising conductive tracks (7), wherein the base (6) has at least one through opening (10); wherein the strain gauge (15) is placed in the through opening (10) of the base (6) and comprises a support (16) and a conductive grid (17) applied on the support (16); wherein the strain gauge (15) is electrically connected to the conductive tracks (7) of the base (6).

15. Strain gauge load cell according to one of the claims from 12 to 14, wherein the monolithic elastic element (2) has an elongated cylindrical shape and the cavity (3) is a through or blind axial hole; wherein the monolithic elastic element (2) is a pin, a screw or a shaft.

## Patentansprüche

1. Verfahren zum internen Einsetzen einer Dehnungsmessstreifen-Lastdose, umfassend:
▪ Vorbereiten eines monolithischen elastischen Elements (2) einer Lastdose (1), wobei das monolithische elastische Element (1) eine Kavität (3) aufweist;
▪ Vorbereiten wenigstens einer gedruckten Schaltung (5), welche wenigstens einen Dehnungsmessstreifen (15) umfasst, wobei die gedruckte Schaltung (5) eine erste Seite (11), welche dazu eingerichtet ist, mit dem monolithischen elastischen Element (2) gekoppelt zu sein, und eine zweite Seite (13) aufweist, welche der ersten Seite (11) entgegengesetzt ist, wobei eine Haftmittelschicht (12) an wenigstens einem Teil der ersten Seite (11) platziert ist, außer an dem wenigstens einen Dehnungsessstreifen (15);
▪ Aufbringen einer Schicht aus Kleber (22) an der ersten Seite (11) und im Wesentlichen nur an dem wenigstens einen Dehnungsmessstreifen (15);
▪ Einführen der gedruckten Schaltung (5) in die Kavität (3), dafür sorgen, dass die Haftmittelschicht (12) an eine innere Fläche (4) der Kavität (3) haftet;
▪ Pressen des wenigstens einen Dehnungsmessstreifens (15) gegen die innere Fläche (4), um dafür zu sorgen, dass die Schicht aus Kleber (22) polymerisiert, und, um den wenigstens einen Dehnungsmesstreifen (15) an die innere Fläche (4) anzufügen.

2. Verfahren nach Anspruch 1, ebenfalls umfassend: Einwirken von Wärme wenigstens auf die Schicht aus Kleber (22) des Dehnungsmessstreifens (15), um dafür zu sorgen, dass die Schicht aus Kleber (22) polymerisiert.

3. Verfahren nach Anspruch 1 oder 2, wobei der Kleber und das Haftmittel umfassen oder definiert sind durch eine gleiche Substanz.

4. Verfahren nach Anspruch 1, 2 oder 3, wobei das Vorbereiten der gedruckten Schaltung (5) umfasst:
▪ Vorbereiten einer Basis (6), welche leitfähige Bahnen (7) umfasst, wobei die Basis (6) wenigstens eine Durchgangsöffnung (10) aufweist;
▪ Platzieren des wenigstens einen Dehnungsmessstreifens (15) in der Durchgangsöffnung (10), wobei der Dehnungsmessstreifen (15) eine Halterung (16) und ein leitfähiges Gitter (17) umfasst, welches auf der Halterung (16) aufgebracht ist, wobei Ränder der Durchgangsöffnung (10) die Halterung (16) umgeben;
▪ elektrisches Verbinden des Dehnungsmessstreifens (15) mit den leitfähigen Bahnen (7) der Basis (6).

5. Verfahren nach Anspruch 4, wobei eine Vorkehrung zum Anfügen des Dehnungsmessstreifens (15) an die Basis (6) mittels wenigstens einem Verbindungselement (19) vorgenommen wird, so dass die Basis (6) und der Dehnungsmessstreifen (15) einen einzelnen Körper bilden.

6. Verfahren nach Anspruch 4, wobei eine Vorkehrung zum Anfügen des Dehnungsmessstreifens (15) an die Basis (6) vorgenommen wird, teilweise die Halterung (16) an wenigstens einem der Ränder der Durchgangsöffnung (10) überlagernd.

7. Verfahren nach einem der Ansprüche 1 bis 6, wobei die gedruckte Schaltung (5) einen lösbaren Film (14) umfasst, welcher auf die erste Seite (11) aufgebracht ist; wobei vor einem Einführen der gedruckten Schaltung (5) in die Kavität (3) dafür gesorgt wird, dass die Haftmittelschicht (12) an der inneren Fläche (4) der Kavität (3) haftet, wobei der lösbare Film (14) von der ersten Seite (11) entfernt wird.

8. Verfahren nach einem der Ansprüche 1 bis 7, wobei das Drücken des wenigstens einen Dehnungsmessstreifens (15) gegen die innere Fläche (4) umfasst: Einführen eines Drückers (23) in die Kavität (3) und Expandieren des Drückers (23) bis der Drücker (23) gegen den wenigstens einen Dehnungsmessstreifen (15) anliegt; Halten des Drückers (23) in der Kavität (3) im expandierten Zustand.

9. Verfahren nach Anspruch 8, wenn dieser von Anspruch 2 abhängt, wobei das Einwirken von Wärme umfasst: Einführen des monolithischen elastischen Elements (2) mit der gedruckten Schaltung (5) und dem Drücker (23) im expandierten Zustand in einen Ofen.

10. Verfahren nach Anspruch 8, wenn dieser von Anspruch 5 abhängt, wobei der Drücker (23) nur gegen das Verbindungselement (19) drückt.

11. Verfahren nach einem der vorhergehenden Ansprüche 1 bis 10, wobei das Drücken des wenigstens einen Dehnungsmessstreifens (15) gegen die innere Fläche (4) umfasst: Einleiten eines Gases unter Druck in die Kavität (3).

12. Dehnungsmessstreifen-Lastdose, welche gemäß dem Verfahren von einem oder mehreren der Ansprüche von 1 bis 11 eingesetzt wird, wobei der Dehnungsmessstreifen (15) umfasst:
ein monolithisches elastisches Element (2), welches eine Kavität (3) aufweist;
wenigstens eine gedruckte Schaltung (5), welche wenigstens einen Dehnungsmessstreifen (15) umfasst, wobei die gedruckte Schaltung (5) eine erste Seite (11), welche mit einer inneren Fläche (4) der Kavität (3) gekoppelt ist, und eine zweite Seite (13) aufweist, welche der ersten Seite (11) entgegengesetzt ist.

13. Dehnungsmessstreifen-Lastdose nach Anspruch 12, wobei eine Haftmittelschicht (12) die gedruckte Schaltung (5) an die innere Fläche (4) anfügt, außer an dem wenigstens einen Dehnungsessstreifen (15); wobei eine Schicht von polymerisiertem Kleber (22) den wenigstens einen Dehnungsmessstreifen (15) an die innere Fläche (4) anfügt.

14. Dehnungsmessstreifen-Lastdose nach Anspruch 12 oder 13, wobei die gedruckte Schaltung (5) eine Basis (6) umfasst, welche leitfähige Bahnen (7) umfasst, wobei die Basis (6) wenigstens eine Durchgangsöffnung (10) aufweist; wobei der Dehnungsmessstreifen (15) in der Durchgangsöffnung (10) der Basis (6) platziert ist und eine Halterung (16) und ein leitfähiges Gitter (17) umfasst, welches auf die Halterung (16) aufgebracht ist; wobei der Dehnungsmessstreifen (15) elektrisch mit den leitfähigen Bahnen (7) der Basis (6) verbunden ist.

15. Dehnungsmessstreifen-Lastdose nach einem der Ansprüche von 12 bis 14, wobei das monolithische elastische Element (2) eine längliche zylindrische Form aufweist und die Kavität (3) ein Durchgangs- oder axiales Sackloch ist; wobei das monolithische elastische Element (2) ein Stift, eine Schraube oder eine Welle ist.

## Revendications

1. Procédé pour équiper au plan interne un capteur à jauge de contrainte, comprenant les étapes consistant à :
▪ préparer un élément élastique monolithique (2) d'une cellule de charge (1), dans lequel l'élément élastique monolithique (1) présente une cavité (3) ;
▪ préparer au moins un circuit imprimé (5) comprenant au moins une jauge de contrainte (15), dans lequel le circuit imprimé (5) présente une première face (11) configurée pour être accouplée à l'élément élastique monolithique (2) et une seconde face (13) opposée à la première face (11), dans lequel une couche adhésive (12) est placée sur au moins une partie de la première face (11) excepté au niveau de ladite au moins une jauge de contrainte (15) ;
▪ appliquer une couche de colle (22) sur la première face (11) et sensiblement uniquement au niveau de ladite au moins une jauge de contrainte (15) ;
▪ insérer le circuit imprimé (5) dans la cavité (3), faire adhérer la couche adhésive (12) à une surface interne (4) de la cavité (3) ;
▪ presser ladite au moins une jauge de contrainte (15) contre ladite surface interne (4) afin de faire polymériser la couche de colle (22) et de joindre de manière stable ladite au moins une jauge de contrainte (15) à la surface interne (4).

2. Procédé selon la revendication 1, comprenant également : l'administration de chaleur au moins à la couche de colle (22) de la jauge de contrainte (15) pour faire polymériser la couche de colle (22).

3. Procédé selon la revendication 1 ou 2, dans lequel la colle et l'adhésif comprennent ou sont définis par une même substance.

4. Procédé selon la revendication 1, 2 ou 3, dans lequel la préparation du circuit imprimé (5) comprend les étapes consistant à :
▪ préparer une base (6) comprenant des pistes conductrices (7), dans lequel la base (6) présente au moins une ouverture traversante (10) ;
▪ placer ladite au moins une jauge de contrainte (15) dans l'ouverture traversante (10), dans lequel la jauge de contrainte (15) comprend un support (16) et une grille conductrice (17) appliquée sur le support (16), dans lequel les bords de l'ouverture traversante (10) entourent le support (16) ;
▪ connecter électriquement la jauge de contrainte (15) aux pistes conductrices (7) de la base (6).

5. Procédé selon la revendication 4, dans lequel des dispositions sont prises pour joindre la jauge de contrainte (15) à la base (6) à l'aide d'au moins un élément de connexion (19) de sorte que la base (6) et la jauge de contrainte (15) forment un corps unique.

6. Procédé selon la revendication 4, dans lequel des dispositions sont prises pour joindre la jauge de contrainte (15) à la base (6), surimposant partiellement le support (16) sur au moins l'un des bords de l'ouverture traversante (10).

7. Procédé selon l'une des revendications de 1 à 6, dans lequel le circuit imprimé (5) comprend un film amovible (14) appliqué sur la première face (11) ; dans lequel, avant d'insérer le circuit imprimé (5) dans la cavité (3), faire adhérer la couche adhésive (12) à la surface interne (4) de la cavité (3), le film amovible (14) est retiré de la première face (11).

8. Procédé selon l'une des revendications précédentes de 1 à 7, dans lequel la compression de ladite au moins une jauge de contrainte (15) contre ladite surface interne (4) comprend les étapes consistant à : insérer un dispositif de compression (23) dans la cavité (3) et à expanser ledit dispositif de compression (23) jusqu'à ce que ledit dispositif de compression (23) vienne en butée contre ladite au moins une jauge de contrainte (15) ; maintenant le dispositif de compression (23) expansé dans la cavité (3).

9. Procédé selon la revendication 8 lorsqu'elle dépend de la revendication 2, dans lequel l'administration de chaleur comprend l'étape consistant à : insérer l'élément élastique monolithique (2) avec le circuit imprimé (5) et avec le dispositif de compression (23) expansé dans un four.

10. Procédé selon la revendication 8 lorsqu'elle dépend de la revendication 5, dans lequel le dispositif de compression (23) presse uniquement contre l'élément de connexion (19).

11. Procédé selon l'une des revendications précédentes de 1 à 10, dans lequel la compression de ladite au moins une jauge de contrainte (15) contre ladite surface interne (4) comprend l'étape consistant à : introduire un gaz sous pression dans la cavité (3).

12. Capteur à jauge de contrainte équipé selon le procédé selon l'une ou plusieurs des revendications de 1 à 11, dans lequel ladite cellule de charge comprend :
un élément élastique monolithique (2) ayant une cavité (3) ;
au moins un circuit imprimé (5) comprenant au moins une jauge de contrainte (15), dans lequel le circuit imprimé (5) présente une première face (11) accouplée à une surface interne (4) de la cavité (3) et une seconde face (13) opposée à la première face (11).

13. Capteur à jauge de contrainte selon la revendication 12, dans lequel une couche adhésive (12) joint le circuit imprimé (5) à la surface interne (4) excepté au niveau de ladite au moins une jauge de contrainte (15) ; dans lequel une couche de colle (22) polymérisée joint ladite au moins une jauge de contrainte (15) à la surface interne (4).

14. Capteur à jauge de contrainte selon la revendication 12 ou 13, dans lequel le circuit imprimé (5) comprend une base (6) comprenant des pistes conductrices (7), dans lequel la base (6) présente au moins une ouverture traversante (10) ; dans lequel la jauge de contrainte (15) est placée dans l'ouverture traversante (10) de la base (6) et comprend un support (16) et une grille conductrice (17) appliquée sur le support (16) ; dans lequel la jauge de contrainte (15) est électriquement connectée aux pistes conductrices (7) de la base (6).

15. Capteur à jauge de contrainte selon l'une des revendications de 12 à 14, dans lequel l'élément élastique monolithique (2) présente une forme cylindrique allongée et la cavité (3) est un trou traversant ou axial aveugle ; dans lequel l'élément élastique monolithique (2) est une goupille, une vis ou une tige.
